# EUROPÄISCHE PATENTANMELDUNG

(11) **EP 4 092 381 A1**
(43) Veröffentlichungstag der Anmeldung: **23.11.2022**
(21) Anmeldenummer: 22171799.4
(22) Anmeldetag: 05.05.2022
(51) Int. Cl.: G01C 15/02, G01C 15/06

(54) **VORRICHTUNG ZUR MARKIERUNG EINES VERMESSUNGSOBJEKTES**

(30) Priorität: 17.05.2021 DE 202021102669 U
(71) Anmelder: Rothbucher, Georg, 83435 Bad Reichenhall (DE)
(72) Erfinder: Rothbucher, Georg, 83435 Bad Reichenhall (DE)
(74) Vertreter: Schaumburg und Partner Patentanwälte mbB

(57) **Zusammenfassung**

Beschrieben ist eine Vorrichtung (100) zur Markierung eines Vermessungsobjektes. Die Vorrichtung umfasst einen Sockel (102) mit einer Bodenplatte (110), die an dem Vermessungsobjekt anbringbar ist, und einer Drehplatte (112), die auf der Bodenplatte (110) angeordnet und relativ zu dieser um eine erste Achse (A1) drehbar ist, einen einzigen Haltearm (104), der von der Drehplatte (112) absteht und relativ zu dieser drehfest ist, und eine Vermessungsmarke (108), die an dem freien Ende (106) des Haltearms (104) lösbar angebracht und relativ zu diesem um eine zweite Achse (A2) drehbar ist, die senkrecht zu der ersten Achse (A1) liegt.

## Beschreibung

Die vorliegende Erfindung betrifft eine Vorrichtung zur Markierung eines Vermessungsobjektes. Ferner betrifft die Erfindung eine Markierungseinrichtung, die eine solche Vorrichtung und ein Vermessungsstativ und/oder einen Prismenstab umfasst.

Vermessungsmarken werden üblicherweise an ortsfesten Objekten wie z.B. Gebäuden oder im Bereich von Bahngleisanlagen an Elektromasten angebracht. Sie dienen dort als Festpunkte, die unter Verwendung an sich bekannter Messgeräte wie z.B. Laser, Scanner und Totalstationen vermessen werden. Als Vermessungsmarken kommen dementsprechend verschiedenartige Marken wie etwa speziell für Laserscanner oder Drohnen bestimmte Zielmarken und Schilde, klappbare Marken, Klebemarken, Bodenmarken etc. in Betracht. Außerdem gibt es eine Vielzahl an Zubehörteilen wie beispielsweise Adapter, die zusammen mit einer solchen Vermessungsmarke verwendet werden können.

Die Vielfalt an unterschiedlichen Vermessungsmethoden bringt es mit sich, dass ein breites Sortiment an Marken und Zubehörteilen bereitgehalten werden muss, sofern eine Vielzahl an Einsatzmöglichkeiten abgedeckt werden soll. Es wäre deshalb wünschenswert, eine Möglichkeit zu schaffen, mit weniger Aufwand als bisher eine Vielzahl an Anwendungsmöglichkeiten bereitzustellen.

Es ist Aufgabe der Erfindung, eine Vorrichtung zur Markierung eines Vermessungsobjektes anzugeben, die es ermöglicht, mit Hilfe einer Vermessungsmarke ein breites Spektrum an vermessungstechnischen Anwendungen abzudecken.

Die Erfindung löst diese Aufgabe durch eine Vorrichtung, die einen Sockel mit einer Bodenplatte, die an dem Vermessungsobjekt anbringbar ist, und einer Drehplatte umfasst, die auf der Bodenplatte angeordnet und relativ zu dieser um eine erste Achse drehbar ist. Die Vorrichtung weist einen einzigen Haltearm auf, der von der Drehplatte absteht und relativ zu dieser drehfest ist. Ferner umfasst die Vorrichtung eine Vermessungsmarke, die an dem freien Ende des Haltearms lösbar angebracht und relativ zu diesem um eine zweite Achse drehbar ist, die senkrecht zu der ersten Achse liegt.

Die erfindungsgemäße Vorrichtung ermöglicht es einem Benutzer, die Vermessungsmarke um zwei senkrecht zueinander liegende Achsen zu drehen. Dadurch kann die Vermessungsmarke beliebig im Raum ausgerichtet werden. Die räumliche Ausrichtung der Vermessungsmarke ist insbesondere in flexibler Weise an die spezifische Vermessungssituation anpassbar, z.B. in Abhängigkeit der angewandten Messmethode, der Art des zu vermessenden Objektes und/oder der Art des verwendeten Messgerätes. Die Positionierung der Vermessungsmarke erfolgt zum einen dadurch, dass die in dem Sockel vorhandene Bodenplatte, über die der Sockel an dem Vermessungsobjekt angebracht ist, mitsamt dem Haltearm um die erste Achse gedreht wird. Zum anderen wird die an dem Haltearm angelenkte Vermessungsmarke selbst relativ zu dem Haltearm um die zweite Achse gedreht. Da nur ein einziger Haltearm vorhanden ist, stellt die Erfindung eine vorteilhaft platzsparende Lösung bereit, die im Übrigen auch ein ansprechendes Design hat.

Die erste Achse liegt beispielsweise senkrecht zu einer Ebene, die durch die Bodenplatte bzw. die Drehplatte des Sockels definiert ist. In diesem Fall verläuft die zweite Achse parallel zur Plattenebene. Nimmt man z.B. an, dass der Sockel an einer horizontalen Fläche montiert ist, so ist die erste Achse in vertikaler Richtung und die zweite Achse in horizontaler Richtung orientiert.

Mit der Bodenplatte und der darauf aufgesetzten Drehplatte ist der Sockel der erfindungsgemäßen Vorrichtung im Wesentlichen zweiteilig ausgeführt. Die beiden vorgenannten Platten bilden beispielsweise ein unteres bzw. ein oberes Schalenelement, aus denen der Sockel zusammengesetzt ist. Dies begünstigt einen besonders kompakten Aufbau.

Die Bodenplatte, die Drehplatte und der Haltearm können beispielsweise nach einem Spritzgussverfahren gefertigte Bauteile sein. In diesem Fall sind die Drehplatte und der Haltearm vorzugsweise einstückig ausgeführt. Die Verwendung solcher Spritzguss-Bauteile ist insbesondere dann von Vorteil, wenn die erfindungsgemäße Vorrichtung in hohen Stückzahlen zu fertigen ist. Alternativ ist auch denkbar, die genannten Komponenten aus Metall zu fertigen.

Wenn im vorliegenden Kontext von dem freien Ende des Haltearms die Rede ist, so ist damit das Ende gemeint, das von der Bodenplatte, an welcher der Haltearm ansetzt, weg weist.

Vorzugsweise umfasst die Vorrichtung ein in dem Sockel angeordnetes erstes Drehgelenk, durch das die Drehplatte um die erste Achse drehbar mit der Bodenplatte verbunden ist. Dieses erste Drehgelenk kann durch ineinandergreifende Plattenteile gebildet sein, die zum einen an der Bodenplatte und zum anderen an der Drehplatte vorhanden sind. Dabei sind die genannten Plattenteile vorzugsweise einstückig mit der Bodenplatte bzw. der Drehplatte ausgeführt.

In einer vorteilhaften Ausführungsform umfasst das erste Drehgelenk mindestens eine umlaufende Nut und mindestens einen in der Nut geführten Vorsprung. Sind die Bodenplatte und die Drejhplatte beispielsweise als Schalenteile ausgeführt, die zur Ausbildung des Sockels aufeinander gesteckt werden, so können die Nut und der korrespondierende Vorsprung an einander zugewandten Randbereichen der beiden Platten vorgesehen sein. Beim Zusammenstecken der Platten kommen die Nut und der Vorsprung so miteinander in Eingriff, dass sie gegeneinander verdreht werden können. Dabei befindet sich die umlaufende Nut beispielsweise an der Drehplatte, während der umlaufende Vorsprung an der Bodenplatte ausgebildet ist (oder umgekehrt). Es ist ebenso möglich, sowohl an der Bodenplatte als auch an der Drehplatte jeweils eine Nut und zugleich einen Vorsprung vorzusehen. In diesem Fall greift der Vorsprung der Bodenplatte in die ihm zugeordnete Nut der Drehplatte, und der Vorsprung der Drehplatte greift in die ihm zugeordnete Nut der Bodenplatte. Somit wird eine umgreifende Drehführung nach Art einer Hinterschneidung gebildet, welche die gewünschte Rotation der Drehplatte gegenüber der Bodenplatte ermöglicht.

Das erste Drehgelenk kann neben der vorstehend beschriebenen Nutführung weitere gegeneinander verdrehbare Gelenkelemente aufweisen. Während sich die Nut und der korrespondierende Vorsprung vorzugsweise in den Randbereichen der Bodenplatte bzw. der Drehplatte befinden, können diese zusätzlichen Gelenkelemente radial innerhalb der Randbereiche der Platten angeordnet sein.

In einer besonders bevorzugten Ausführungsform umfasst das erste Drehgelenk einen ersten Rastmechanismus, der mehrere Drehraststellungen der Drehplatte um die erste Achse definiert. Beispielsweise können mehrere diskrete Drehraststellungen der Drehplatte relativ zur Bodenplatte in vorbestimmten Winkelabständen, (z.B. 60°) vorgesehen sein. Der erste Rastmechanismus kann z.B. eine umlaufende Wand umfassen, die innerhalb der Schalenöffnung einer der beiden schalenförmig ausgeführten Platten angeordnet ist und mehrere vertikal verlaufende Rastkerben aufweist. In diesem Fall hat die jeweils andere Platte mehrere vertikal ausgerichtete Rastnasen, die in Anzahl, Ausrichtung und Formgebung mit den Rastkerben korrespondieren. Wird die Drehplatte relativ zur Bodenplatte gedreht, so gleiten die Rastnasen der einen Platte entlang der umlaufenden Wand der anderen Platte und rasten in der Wand ein, sobald sie in die in der Wand ausgebildeten Rastkerben eintreten. Dadurch wird nicht nur eine vorteilhafte Federrasterung realisiert. Vielmehr bildet in diesem Fall der Rastmechanismus zugleich einen Teil des Drehgelenks und trägt dazu bei, dass das Drehgelenk stabil und zugleich leichtgängig ist.

In einer bevorzugten Ausführungsform umfasst die Vorrichtung ein an dem freien Ende des Haltearms angeordnetes zweites Drehgelenk, durch das die Vermessungsmarke um die zweite Drehachse drehbar mit dem Haltearm verbunden ist. Das zweite Drehgelenk befindet sich also an dem Ende des Haltearms, das von der Bodenplatte des Sockels abgewandt ist.

In einer besonders bevorzugten Ausführungsform umfasst das zweite Drehgelenk einen Wechselmechanismus, der das Lösen und das Anbringen der Vermessungsmarke an dem Haltearm ermöglicht. Je nach Anwendung kann so wahlweise eine geeignete Vermessungsmarke an der erfindungsgemäßen Vorrichtung angebracht werden.

Vorzugsweise umfasst das zweite Drehgelenk eine an dem freien Ende des Haltearms ausgebildete Aufnahme und zwei in der Aufnahme positionierbare Verbindungselemente, von denen ein erstes Verbindungselement drehfest mit der Vermessungsmarke gekoppelt ist und ein zweites Verbindungselement in kraftschlüssiger Verbindung mit dem ersten Element betätigbar ist. Um die Vermessungsmarke zu wechseln, kann der Benutzer bei dieser Ausführungsform das zweite Verbindungselement betätigten und dadurch den Kraftschluss zwischen den beiden Verbindungselement lösen. Anschließend nimmt er die Vermessungsmarke von dem Haltearm ab und ersetzt diese durch eine neue Marke. Um die neue Vermessungsmarke an dem Haltearm zu befestigen, betätigt der Benutzer wiederum das zweite Verbindungselement und stellt so wieder eine kraftschlüssige Verbindung zwischen den beiden Verbindungselement her.

Das erste Verbindungselement ist beispielsweise eine Schraube, während das zweite Verbindungselement eine auf der Schraube drehbare Gewindebuchse ist. Die Schraube kann als eingespritztes Bauteil einstückig mit der Vermessungsmarke ausgeführt sein. Um die Vermessungsmarke an einem Haltearm anzubringen, schraubt der Benutzer das Innengewinde der Gewindebuchse auf das Außengewinde der Schraube. Dabei kann die Gewindebuchse mit einem Betätigungselement versehen sein, das dem Benutzer das Aufschrauben der Gewindebuchse auf die Schraube erleichtert. Beispielsweise ist an der Gewindebuchse ein von außen zugänglicher Schlitz vorgesehen, in den der Benutzer einen Schraubendreher, eine Münze oder dgl. einführt, um damit die Gewindebuchse in einer Schraubbewegung auf dem Außengewinde der Schraube festzuziehen.

In einer besonders bevorzugten Ausführungsform umfasst das erste Drehgelenk einen zweiten Rastmechanismus, der mehrere Drehraststellungen der Vermessungsmarke um die zweite Achse definiert. Wie der in dem Sockel vorgesehene erste Rastmechanismus kann auch der zum Drehen der Vermessungsmarke bestimmte zweite Rastmechanismus mehrere diskrete Drehraststellungen in vorbestimmten Winkelabständen bereitstellen. Nimmt man rein beispielhaft an, dass der erste Rastmechanismus n diskrete Raststellungen und der zweite Rastmechanismus m diskrete Drehraststellungen definiert, so ergeben sich im Zusammenwirken der beiden Rastmechanismen insgesamt n x m verschiedene Ausrichtungen der Vermessungsmarke im Raum.

Die erfindungsgemäße Vorrichtung kann in einer alternativen Ausführungsform auch so ausgebildet sein, dass anstelle der vorstehend beschriebenen Rasterung eine stufenlose Verstellung der Vermessungsmarke um die beiden Achsen möglich ist. In diesem Fall kann auf die Rastmechanismen verzichtet werden.

Vorzugsweise umfasst die Vorrichtung mindestens eine Adapterplatte, die in einer Vertiefung einsetzbar ist, die an der Unterseite der Bodenplatte ausgebildet und in ihrer Form an die Adapterplatte angepasst ist. Beispielsweise haben die Vertiefung und daran angepasst auch die Adapterplatte jeweils die Form eines regelmäßigen Polygons mit abgerundeten Ecken. Eine solche Form erleichtert es dem Benutzer, die Adapterplatte lagerichtig in die Vertiefung der Bodenplatte einzulegen. Der Adapter kann dazu verwendet werden, die erfindungsgemäße Vorrichtung direkt an dem Vermessungsobjekt oder beispielsweise an einem Aufnahmezapfen anzubringen, der an dem Vermessungsobjekt befestigt ist.

Die Adapterplatte weist beispielsweise eine Durchgangsbohrung auf. In diesem Fall ist die Adapterplatte z.B. darauf ausgelegt, mittels einer durch die Durchgangsbohrung geführten Schraube an einem Holzmast befestigt zu werden.

In einer alternativen Ausführungsform hat die Adapterplatte einen von ihrem Plattenkörper abstehenden Gewindeschaft mit einem Außengewinde und/oder einem Innengewinde. Über den Gewindeschaft kann die Adapterplatte beispielsweise auf das an einem Vermessungsstativ vorgesehene Außen- bzw. Innengewinde geschraubt werden, um die erfindungsgemäße Vorrichtung an dem Vermessungsstativ zu befestigen. Die Gewinde sind beispielsweise als 5/8"-Gewinde ausgeführt.

In einer weiteren alternativen Ausführungsform weist die Adapterplatte eine von ihrem Plattenkörper abstehende Aufsteckbuchse auf. Diese Aufsteckbuchse dient beispielsweise dazu, die Adapterplatte auf einen an dem Vermessungsobjekt angebrachten Aufnahmezapfen zu stecken. Dabei ist die Aufsteckbuchse in ihrer Form vorzugsweise so an den Aufnahmezapfen angepasst, dass beim Aufstecken ein Formschluss zwischen Aufsteckbuchse und Aufnahmezapfen hergestellt wird.

Die Adapterplatte ist vorzugsweise aus Metall, beispielsweise Edelstahl gefertigt. Dadurch wird es möglich, die Adapterplatte mittels eines oder mehrerer Magnete in der Vertiefung der Bodenplatte anzubringen.

In einer besonders bevorzugten Ausführungsform weist die Bodenplatte des Sockels an ihrer Unterseite eine Magnetanordnung auf. Diese Magnetanordnung ist beispielsweise aus mehreren Magneten gebildet, die in mehreren hierfür an der Bodenplatte vorgesehenen Magnetaufnahmen angeordnet sind.

Vorzugsweise umfasst die Magnetanordnung zur Anbringung der Bodenplatte an dem Vermessungsobjekt mehrere erste Magnete, die in einem Randbereich an der Unterseite der Bodenplatte angeordnet sind. Dadurch wird es möglich, den Sockel der erfindungsgemäßen Vorrichtung allein magnetisch, d. h. ohne zusätzliche Befestigungsmittel an einem Vermessungsobjekt zu montieren, sofern Letzteres aus einem magnetischen Metall besteht.

Alternativ oder zusätzlich kann die Magnetanordnung zur Anbringung der Adapterplatte an der Bodenplatte mehrere zweite Magnete umfassen, die in der Vertiefung angeordnet sind, die an der Unterseite der Bodenplatte ausgebildet ist. Diese zweiten Magnete können dazu verwendet werden, eine aus einem magnetischen Metall bestehende Adapterplatte oben beschriebene Art ohne zusätzliche Befestigungsmittel in der Vertiefung zu befestigen, die in der Bodenplatte ausgebildet ist.

Alternativ oder zusätzlich kann die Magnetanordnung einen dritten Magneten umfassen, der mittig an der Unterseite der Bodenplatte angeordnet ist. Dies ermöglicht es dem Benutzer, den Sockel der Vorrichtung ohne zusätzliche Befestigungsmittel an einem Aufnahmezapfen zu montieren, sofern der Aufnahmezapfen aus einem magnetischen Metall gefertigt ist.

In einer weiteren bevorzugten Ausführungsform ist an der Unterseite der Bodenplatte mindestens eine rutschfeste Noppe angeordnet. Dadurch wird sichergestellt, dass der an dem Vermessungsobjekt angebrachte Sockel der Vorrichtung nicht verrutscht, wenn der Benutzer die Drehplatte des Sockels und/oder die an dem Haltearm angebrachte Vermessungsmarke verdreht. Vorzugsweise sind mehreren Noppen vorgesehen, die umlaufend im Randbereich der Bodenplatte angeordnet sind.

Der Haltearm hat vorzugsweise die Form eines Bogens, der näherungsweise einen Viertelkreis beschreibt. Die Bogenform des Haltearms ermöglicht es dem Benutzer, die Vermessungsmarke im Wesentlichen von allen Seiten zu greifen, um sie in der gewünschten Weise um die zweite Achse zu drehen.

Die Vermessungsmarke hat beispielsweise die Form einer Scheibe oder einer Kugel, und sie ist vorzugsweise mit einem Vermessungsinstrument wie einem Laser, einem Scanner, und/oder einer Totalstation verwendbar. Obgleich die vorgenannten Konfigurationen bevorzugte Ausführungsformen darstellen, ist die Vermessungsmarke insbesondere hinsichtlich ihrer Formgebung in keiner Weise beschränkt. Bei Verwendung einer scheibenförmigen Marke kann letztere eine kreisrunde Form oder aber eine beliebige andere Form haben. Außerdem kann die Vermessungsmarke nur einseitig oder aber beidseitig bedruckt sein.

Gemäß einem weiteren Aspekt der Erfindung ist ein Markierungseinrichtung vorgesehen, die eine Vorrichtung vorstehend beschriebene Art zur Markierung des Vermessungsobjektes sowie ein Vermessungsstativ und/oder einen Prismenstab umfasst, wobei die Vorrichtung mit ihrer Bodenplatte an dem Vermessungsstativ und/oder dem Prismenstab anbringbar ist.

Eine solche Markierungseinrichtung kann in besonders flexibler Weise an alle gängigen Messsysteme angepasst werden. Insbesondere ist es möglich, die Vermessungsmarke unabhängig von der Verwendung unterschiedlicher Adapter stets in einem gleichen Abstand von einem Bezugspunkt anzuordnen. Beispielsweise kann der Mittelpunkt der Vermessungsmarke in einem exakt definierten Abstand über einem Messprisma positioniert werden.

Exemplarisch umfasst eine erfindungsgemäße Konfiguration der Markierungseinrichtung ein Stativ oder einen Dreifuss, auf dem ein erster Adapter angebracht ist. Auf diesem ersten Adapter ist ein Messprisma montiert, auf dessen Oberseite ein zweiter Adapter angebracht ist. Auf dem zweiten Adapter ist die oben beschriebene Vorrichtung über ihren Sockel montiert, an den der Haltearm mit der daran befestigten Vermessungsmarke anschließt. Die Montage des Sockels kann beispielsweise mit Hilfe einer Adapterplatte oben beschriebener Art erfolgen, die einen von ihrem Plattenkörper abstehenden Gewindeschaft mit einem Außengewinde hat.

Die vorstehend angegebene Konfiguration ist lediglich als Beispiel zu verstehen. Wie schon weiter oben angedeutet, sind auch Konfigurationen möglich, in denen der Sockel der erfindungsgemäßen Vorrichtung beispielsweise über magnetische Wechselwirkung direkt an einem Vermessungsobjekt oder an einem Aufnahmezapfen montiert ist, das bzw. der selbst magnetisch ist.

Die Erfindung wird im Folgenden anhand der Figuren näher erläutert. Darin zeigen:
- Figur 1: eine Seitenansicht einer Vorrichtung zur Markierung eines Vermessungsobjektes gemäß einem Ausführungsbeispiel;
- Figur 2: eine Draufsicht auf die Markierungsvorrichtung;
- Figur 3: eine Vorderansicht der Markierungsvorrichtung;
- Figur 4: eine weitere Vorderansicht der Markierungsvorrichtung mit gedrehter Vermessungsmarke;
- Figur 5: eine seitliche Schnittansicht der Markierungsvorrichtung;
- Figur 6: eine teilweise geschnittene Perspektivansicht der Markierungsvorrichtung zur Veranschaulichung des Aufbaus eines Sockels;
- Figur 7: eine teilweise geschnittene Perspektivansicht der Markierungsvorrichtung zur Veranschaulichung eines an einem Haltearm angeordneten Drehgelenks;
- Figur 8: eine weitere teilweise geschnittene Perspektivansicht der Markierungsvorrichtung zur Veranschaulichung des in einem Haltearm angeordneten Drehgelenks;
- Figur 9: eine Rückansicht der Markierungsvorrichtung;
- Figur 10: eine teilweise geschnittene Rückansicht der Markierungsvorrichtung ohne Bodenplatte zur Veranschaulichung eines in dem Drehgelenk integrierten Rastmechanismus;
- Figur 11: eine Unteransicht der Markierungsvorrichtung zur Veranschaulichung der Unterseite einer Bodenplatte des Sockels; und
- Figur 12: perspektivische Ansichten unterschiedlicher Adapterplatten.

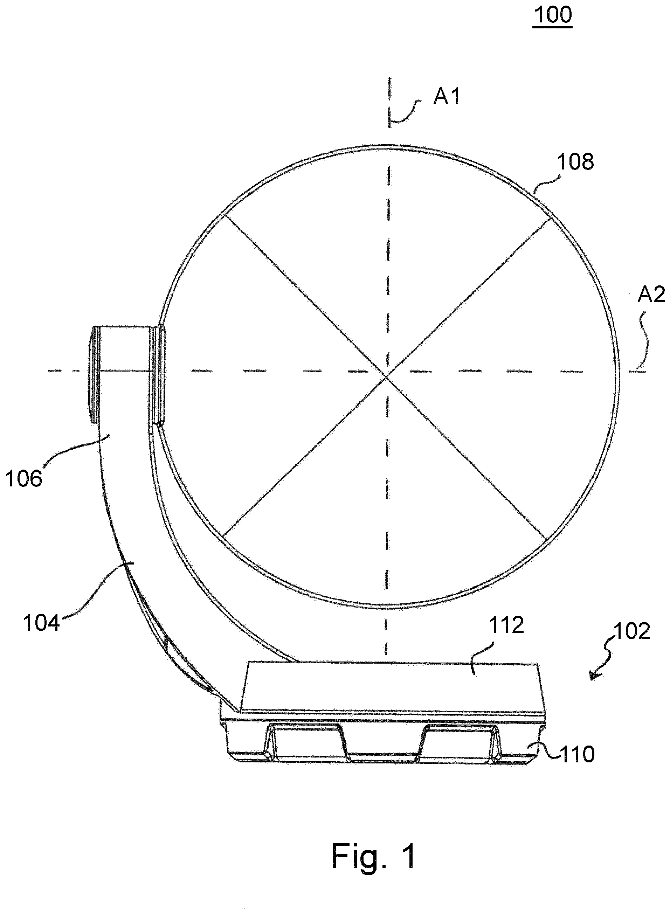

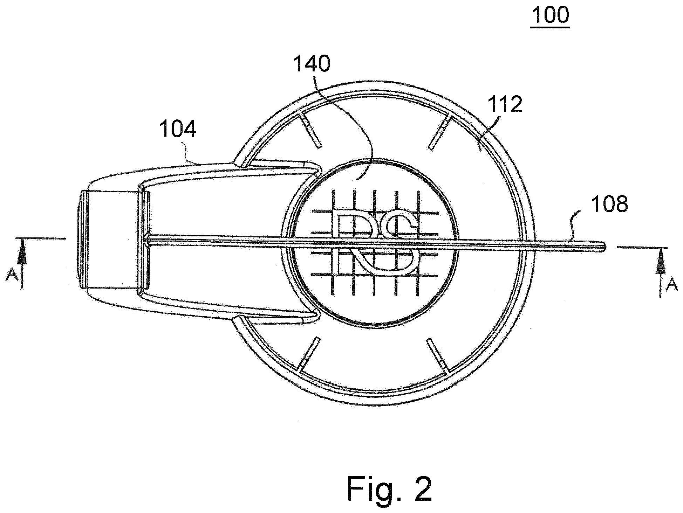

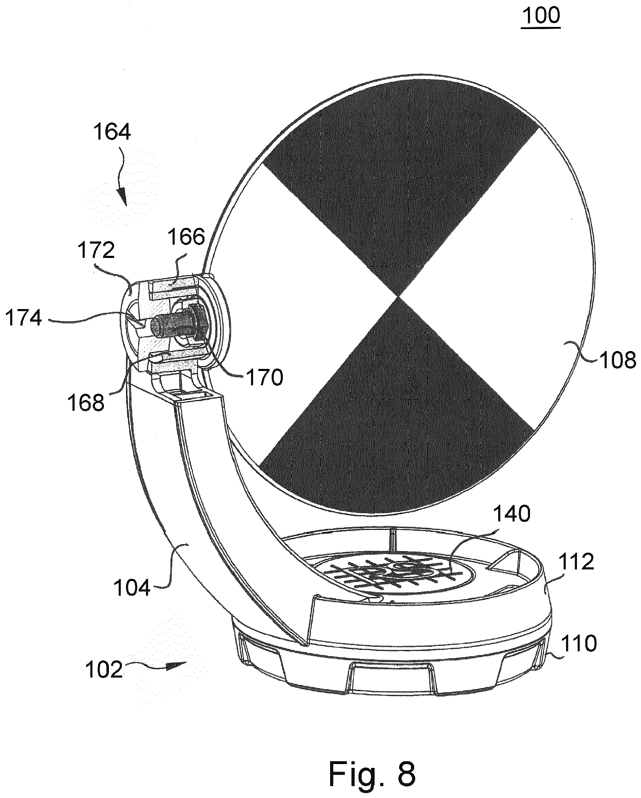

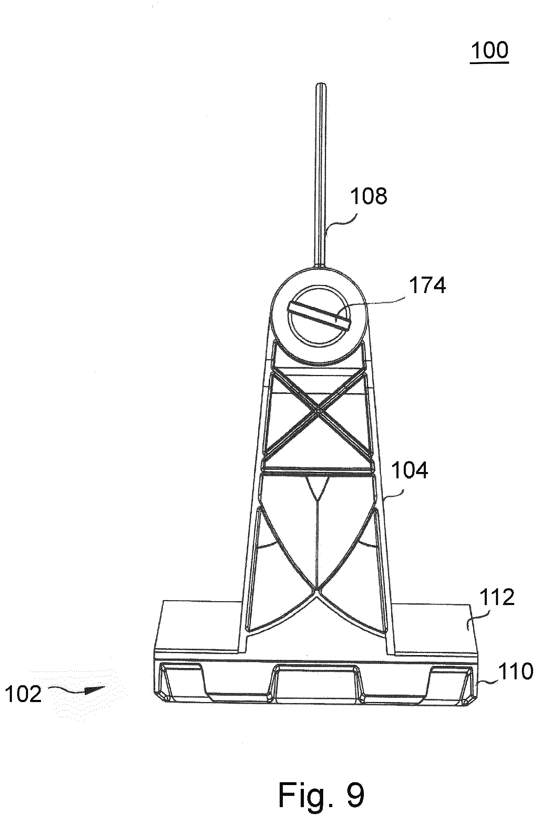

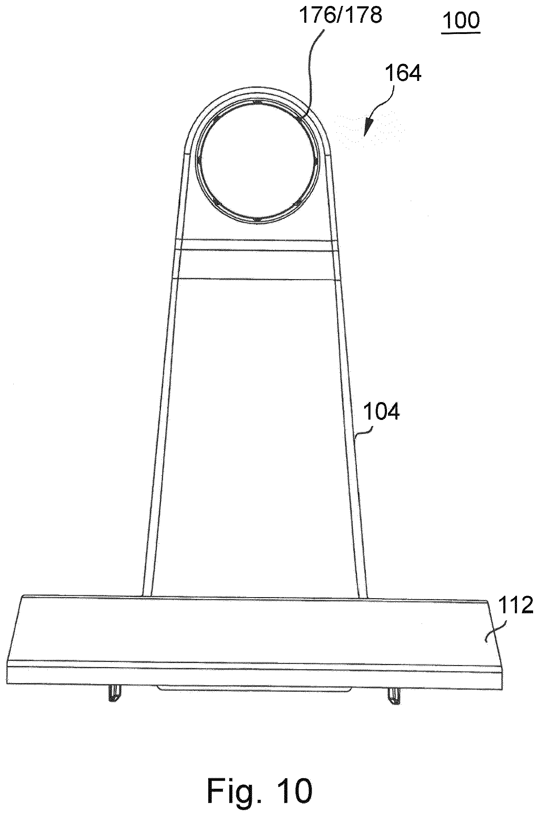

Im Folgenden wird ein spezielles Ausführungsbeispiel einer erfindungsgemäßen Vorrichtung 100 beschrieben, die dazu dient, ein nicht gezeigtes Vermessungsobjekt zu markieren. Die Vorrichtung 100 wird in an sich bekannter Weise zusammen mit einem Messgerät, z.B. einem Laser, einem Scanner, oder einer Totalstation eingesetzt. In der folgenden Beschreibung wird zusammenschauend auf die Figuren 1 bis 12 Bezug genommen, welche die Vorrichtung 100 in verschiedenen Ansichten zeigen.

Die Vorrichtung 100 weist einen Sockel 102 auf, der darauf ausgelegt ist, direkt oder mit Hilfe weiterer Zubehörteile, z.B. geeigneter Adapter (in den Figuren nicht gezeigt) an dem Vermessungsobjekt angebracht zu werden. Ausgehend von dem Sockel 102 erstreckt sich ein Haltearm 104. In dem vorliegenden Ausführungsbeispiel hat der Haltearm 104 die Form eines Bogens, der in der Seitenansicht gemäß Figur 1 näherungsweise einen Viertelkreis beschreibt. An einem freien Ende 106 des Haltearms 104 ist eine Vermessungsmarke 108 angebracht. Wie später im Detail erläutert, ist die Vorrichtung 100 so ausgebildet, dass sich die an dem Haltearm 104 befestigte Vermessungsmarke 108 um zwei senkrecht zueinander liegende Achsen A1 und A2 drehen lässt. Wie in Figur 1 gezeigt, schneiden sich die beiden Achsen A1, A2 in einem Mittelpunkt der Vermessungsmarke 108. Dies bedeutet, dass der Mittelpunkt der Vermessungsmarke 108 ortsfest bleibt, wenn die Vermessungsmarke 108 um die beiden Achsen A1, A2 gedreht wird.

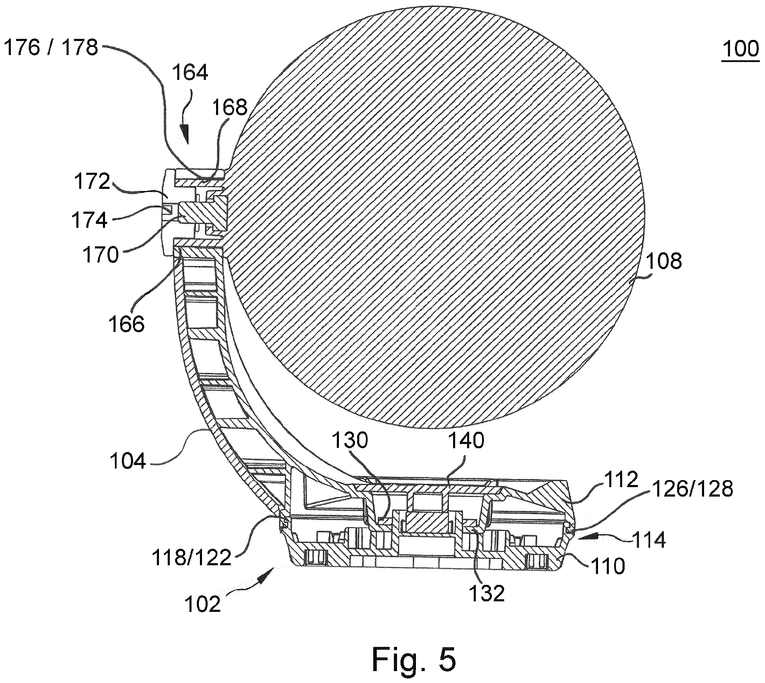

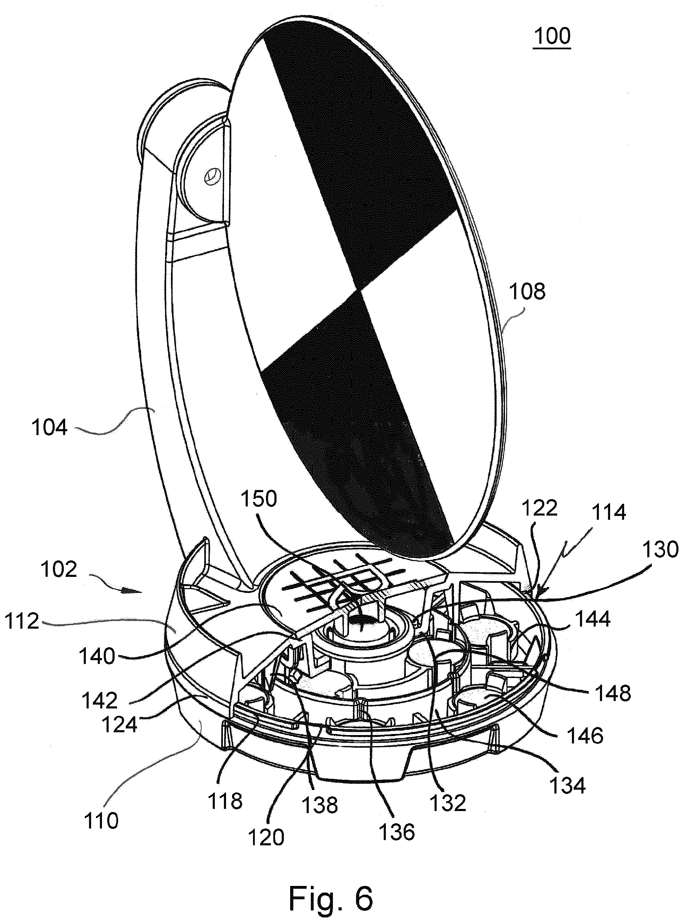

Der Sockel 102 der Vorrichtung 100 ist aus einer Bodenplatte 110 und einer darauf aufgesetzten Drehplatte 112 zusammengesetzt. Wie z.B. den Figuren 5 und 6 zu entnehmen ist, sind die beiden Platten 110, 112 in dem vorliegenden Ausführungsbeispiel aus schalenartigen Elementen gebildet, die mit ihren Schalenöffnungen einander zugewandt sind.

Die Bodenplatte 110 dient der Anbringung der Vorrichtung 110 an dem Vermessungsobjekt. Damit ist die Bodenplatte 110 ortsfest relativ zu dem Vermessungsobjekt angeordnet. Demgegenüber ist die Drehplatte 112 derart mit der Bodenplatte 110 gekoppelt, dass sie sich relativ zur Bodenplatte 110 um die Achse A1 drehen lässt. Hierfür verfügt der Sockel 102 über ein erstes Drehgelenk, das in Figur 6 allgemein mit dem Bezugszeichen 114 bezeichnet ist.

Wie in den Figur 5 und 6 gezeigt, beinhaltet das Drehgelenk 114 einen umlaufenden Vorsprung 118, der an einem nach oben gerichteten Randbereich 120 der Bodenplatte 110 ausgebildet ist. Das Drehgelenk 114 umfasst ferner eine mit dem Vorsprung 118 korrespondierende Nut 122, die in einem nach unten gerichteten Randbereich 124 der Drehplatte 112 vorgesehen ist. Der Vorsprung 118 greift in die Nut 122, sodass Letztere längs des Vorsprungs 118 geführt ist, wenn die Drehplatte 112 um die Achse A1 relativ zur Bodenplatte 110 gedreht wird. Eine dem Paar 118/122 entsprechende Drehführung ist aus einem weiteren Vorsprung 126 und einer weiteren Nut 128 gebildet, wobei sich der Vorsprung 126 an der Drehplatte 112 und die Nut 128 an der Bodenplatte 110 befindet. Die beiden Führungspaare 118/122 und 126/128 bilden eine umgreifende Drehführung nach Art einer Hinterschneidung. Diese Drehführung erlaubt es dem Benutzer, die Drehplatte 112 gegenüber der Bodenplatte 110 um die Achse A1 zu drehen.

Wie in Figuren 5 und 6 gezeigt, weist die Drehplatte 112 eine ringförmige Gleitscheibe 130 auf, die auf einer umlaufenden Flanschfläche 132 aufsetzt, die an der Bodenplatte 110 ausgebildet ist. Die Gleitscheibe 130 gleitet auf der Flanschfläche 132, wenn die Drehplatte 112 um die Achse A1 rotiert. Somit sind die Gleitscheibe 130 und die Flanschfläche 132 ebenfalls Teil der Drehgelenks 114.

Innerhalb der Schalenöffnung der Bodenplatte 120 befindet sich eine umlaufende Wand 134, die an ihrer Außenfläche mehrere vertikal ausgerichtete Rastkerben 136 aufweist. Die Rastkerben 136 korrespondieren mit einer entsprechenden Anzahl von Rastnasen 138, die an der Unterseite der Drehplatte 112 ausgeformt und vertikal nach unten gerichtet sind. Wird die Drehplatte 112 um die Achse A1 gedreht, zu gleiten die Rastnasen 138 entlang der Außenseite der Wand 134 und rasten in einer entsprechenden Drehstellung in die Rastkerben 136 ein. Somit bilden die Rastkerben 136 und die Rastnasen 138 einen Rastmechanismus, der zugleich dazu beiträgt, dass die Drehplatte 112 in ihrer Rotationsbewegung stabil und leichtgängig geführt ist.

Der Sockel 102 umfasst ferner einen Deckel 140, der von oben in eine entsprechende Öffnung der Drehplatte 112 eingesetzt wird. Dabei kommt ein Randbereich an der Unterseite des Deckels 140 in Anlage mit einer ringförmigen Stufe 142, welche die vorgenannte Öffnung der Drehplatte 112 begrenzt.

Die Bodenplatte 110 weist in ihrer Schalenöffnung ferner mehrere Magnetaufnahmen auf, von denen in Figur 6 eine Aufnahme stellvertretend mit 144 bezeichnet ist. In den Aufnahmen 144 sind Magnete eingesetzt, die sich in Bezug auf die Drehachse A1 in unterschiedlichen radialen Positionen befinden. In dem vorliegenden Ausführungsbeispiel sind mehrere erste Magnete 146 vorgesehen, die umlaufend in einem Randbereich an der Unterseite der Bodenplatte 110 positioniert sind. Radial innerhalb der ersten Magnete 146 befinden sich mehrere zweite Magnete 148. Schließlich ist ein einzelner Magnet 150 mittig in der Bodenplatte 110 angeordnet. Die Bodenplatte 110 ist in Abstimmung auf die Magnete 146, 148, 150 derart ausgeführt, dass Letztere durch die Bodenplatte 110 hindurch magnetisch wirksam sind.

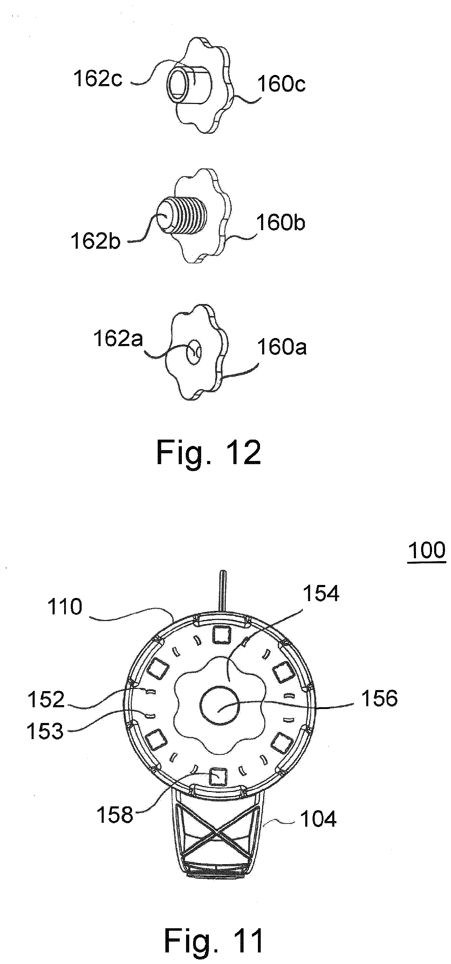

In der Unteransicht gemäß Figur 11 befinden sich die ersten Magnete 146 jeweils zwischen zwei Aussparungen 152, 153, die in der Bodenplatte 110 ausgebildet sind. Demgegenüber sind die zweiten Magnete 148 im Bereich einer Vertiefung 154 angeordnet, die an der Unterseite der Bodenplatte 102 vorgesehen ist. In dem gezeigten Ausführungsbeispiel hat die Vertiefung 154 die Form eines regelmäßigen Polygons mit abgerundeten Ecken. Schließlich befindet sich der dritte Magnet 150 im Bereich einer weiteren zentralen Vertiefung 156, die ebenfalls an der Unterseite der Bodenplatte 102 ausgebildet ist. Die zentrale Vertiefung 156 ist gegenüber der sie umgebenden Vertiefung 154 noch einmal um einen bestimmten Betrag in Richtung der Drehplatte 112 abgesenkt.

An der Unterseite der Bodenplatte 110 befinden sich zudem mehrere rutschfeste Noppen 158. Diese sorgen dafür, dass die an dem Vermessungsobjekt angebrachte Sockel 102 nicht verrutscht, wenn der Benutzer die Drehplatte 112 oder die an dem Haltearm 104 angebrachte Vermessungsmarke 108 mit seiner Hand dreht.

In die Vertiefung 154, die an der Unterseite der Bodenplatte 110 vorgesehen ist, kann eine Adapterplatte eingesetzt werden, die in Figur in unterschiedlichen Ausführungsformen 160a, 160b, 160c dargestellt sind. In dem vorliegenden Ausführungsbeispiel ist die jeweilige Adapterplatte 160a, 160b, 160c aus einem magnetischen Metall, z.B. Edelstahl gefertigt. Dadurch ist es möglich, die Adapterplatte 160a, 160b, 160c ohne weitere Befestigungsmittel allein durch die Wirkung der zweiten Magnete 148 in der Vertiefung 154 zu fixieren. Um einen guten Halt in der Vertiefung 154 zu gewährleisten, hat die Adapterplatte 160a, 160b, 160c in Anpassung an die Vertiefung 154 die Form eines abgerundeten Polygons.

Die Adapterplatte 160a hat ein zentrales Durchgangsloch 162a, durch das beispielsweise eine Schraube geführt werden kann, um die Adapterplatte 160a an dem Vermessungsobjekt anzuschrauben.

In einer alternativen Ausführungsform hat die Adapterplatte 160b einen Gewindeschaft 162b, der mittig vom Plattenkörper absteht. Der Gewindeschaft 162b kann, wie in Figur 12 gezeigt ist, mit einem Außengewinde versehen sein. Selbstredend ist es ebenso möglich, den Gewindeschaft mit einem Innengewinde auszubilden. Mit Hilfe des Gewindeschafts 162b kann die Adapterplatte 160b beispielsweise auf ein Außen- bzw. Innengewinde geschraubt werden, das an einem Vermessungsstativ vorhanden ist.

In einer weiteren alternativen Ausführungsform hat die Adapterplatte 160c eine mittige Aufsteckbuchse 162c, die zentral vom Plattenkörper absteht. Die Aufsteckbuchse 162c kann beispielsweise dazu genutzt werden, die Adapterplatte 160 auf einen Aufnahmezapfen zu stecken, der an dem Vermessungsobjekt befestigt ist.

Jede der in Figur 12 gezeigten Ausführungsformen ermöglicht es dem Benutzer, zunächst die Adapterplatte 160a, 160b, 160c an dem Vermessungsobjekt anzubringen und anschließend einfach den Sockel 102 mit der an dessen Bodenplatte 110 ausgebildeten Vertiefung 154 auf die Adapterplatte 160a, 160b, 160c zu stecken. Durch die Wirkung der zweiten Magnete 144 ist der Sockel 102 ohne weitere Befestigungsmittel sicher an die Adapterplatte 160a, 160b, 160c gehalten.

Die Vorrichtung 100 verfügt ferner über ein weiteres Drehgelenk, das es dem Benutzer ermöglicht, die Vermessungsmarke 108 um die Achse A2 zu drehen. Dieses Drehgelenk ist in den Figuren 5, 7, 8 und 10 allgemein mit dem Bezugszeichen 164 bezeichnet.

Am freien Ende 106 des Haltearms 104 befindet sich eine im Querschnitt kreisrunde Aufnahme 166. In die Aufnahme 166 ist ein rohrförmiger Stutzen 168 eingesteckt, der einstückig mit der Vermessungsmarke 108 ausgebildet ist. Ferner ist eine Schraube 170 als eingespritztes Bauteil einstückig mit der Vermessungsmarke 108 ausgeführt und innerhalb des Stutzens 168 angeordnet. Die Schraube 170 befindet sich in Eingriff mit einer Gewindebuchse 172, deren Innengewinde auf das Außengewinde der Schraube 170 geschraubt ist. Die Schraube 170 und die Gewindebuchse 172 bilden die Verbindungselemente eines kraftschlüssigen Wechselmechanismus, der es dem Benutzer ermöglicht, die Vermessungsmarke 108 von dem Haltearm 104 zu lösen und bei Bedarf durch eine andere Marke zu ersetzen. Um das Wechseln der Marke zu erleichtern, hat die Gewindebuchse 172 an ihrem von der Aufnahme 166 abgewandten Ende einen Schlitz 174, in den der Benutzer einen Schraubendreher, eine Münze oder dgl. einführen kann, um die Gewindebuchse 172 auf der Schraube 170 festzuziehen bzw. von der Schraube 170 zu lösen.

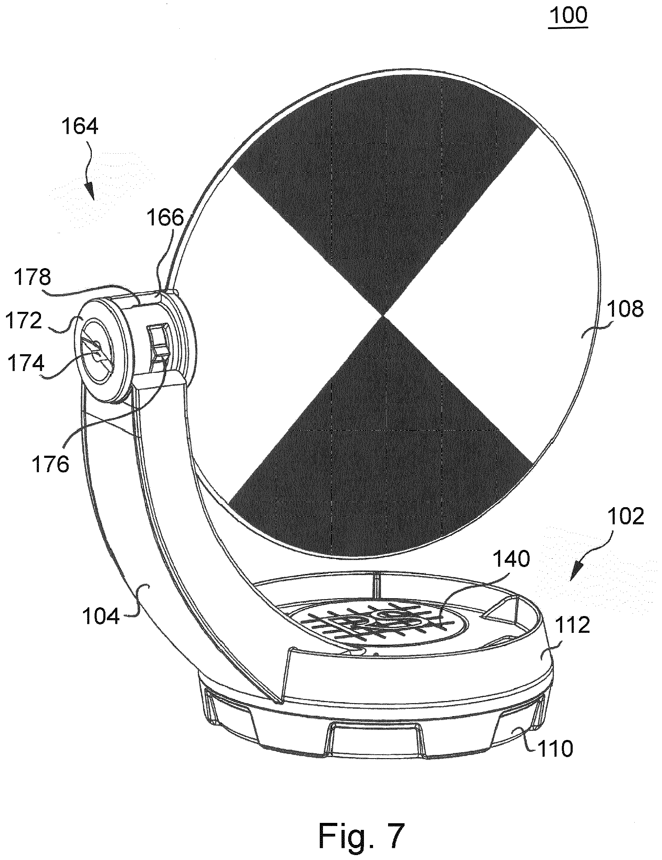

An der Außenfläche des Stutzens 168 sind mehrere Rastnasen 176 vorhanden, die mit Rastvertiefungen 178 korrespondieren, die an der Innenfläche der Aufnahme 166 ausgebildet sind (vgl. insbesondere Figur 7). Dreht der Benutzer die Vermessungsmarke 108 um die Achse A1, so kommen die Rastnasen 176 des Stutzens 168 in Eingriff mit den Rastvertiefen der Aufnahme 166. Somit wird in dem Drehgelenk 164 ein Rastmechanismus bereitgestellt, der mehrere Drehstellungen der Vermessungsmarke 108 um die Achse A2 definiert.

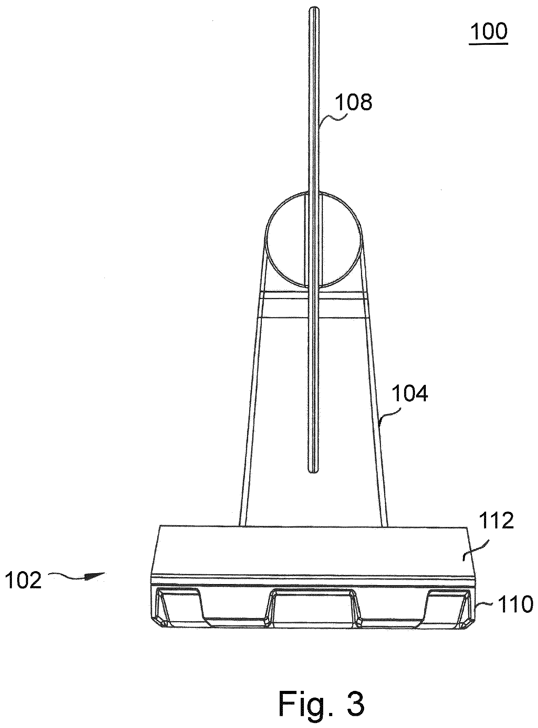

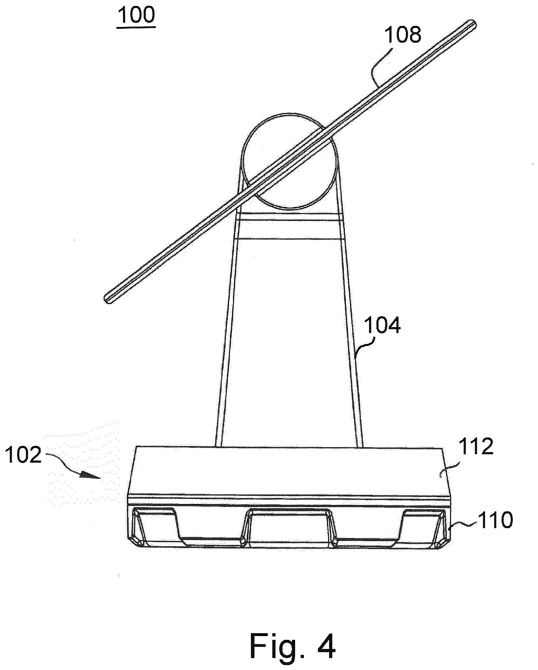

Mit Hilfe der beiden oben beschriebenen Drehgelenke 114, 164 lässt sich die an dem Haltearm 104 lösbar befestigte Vermessungsmarke 108 durch Drehen um die Achsen A1 und A2 nach Belieben in eine gewünschte Ausrichtung relativ zu der Bodenplatte 110 bringen, die drehfest an dem Vermessungsobjekt angebracht ist. In den Figuren 3 und 4 sind beispielhaft zwei mögliche Drehstellungen der Vermessungsmarke 108 um die Achse A2 dargestellt.

Da beide Drehgelenke 114, 164 über Rastungen verfügen, erfolgt die Ausrichtung der Vermessungsmarke 108 in dem vorliegenden Ausführungsbeispiel stufenweise. Es ist jedoch ebenso möglich, eine stufenlose Drehung der Vermessungsmarke 108 vorzusehen. In diesem Fall kann auf die Rastmechanismen verzichtet werden.

### Bezugszeichenliste

- 100: Vorrichtung
- 102: Sockel
- 104: Haltearm
- 106: freies Ende
- 108: Vermessungsmarke
- 110: Bodenplatte
- 112: Drehplatte
- 114: Drehgelenk
- 118: Vorsprung
- 120: Randbereich
- 122: Nut
- 124: Randbereich
- 126: Vorsprung
- 128: Nut
- 130: Gleitscheibe
- 132: Flanschfläche
- 134: Wand
- 138: Rastnase
- 140: Deckel
- 142: Stufe
- 144: Aufnahme
- 146: Magnet
- 148: Magnet
- 150: Magnet
- 152: Aussparung
- 154: Vertiefung
- 156: Vertiefung
- 158: Noppe
- 160a: Adapterplatte
- 160b: Adapterplatte
- 160c: Adapterplatte
- 162a: Durchgangsloch
- 162b: Gewindeschaft
- 162c: Aufsteckbuchse
- 164: Drehgelenk
- 168: Stutzen
- 170: Schraube
- 172: Gewindebuchse
- 174: Schlitz
- 176: Rastnase
- 178: Rastvertiefung

## Patentansprüche

1. Vorrichtung (100) zur Markierung eines Vermessungsobjektes, umfassend:
einen Sockel (102) mit einer Bodenplatte (110), die an dem Vermessungsobjekt anbringbar ist, und einer Drehplatte (112), die auf der Bodenplatte (110) angeordnet und relativ zu dieser um eine erste Achse (A1) drehbar ist,
einen einzigen Haltearm (104), der von der Drehplatte (112) absteht und relativ zu dieser drehfest ist, und
eine Vermessungsmarke (108), die an dem freien Ende (106) des Haltearms (104) lösbar angebracht und relativ zu diesem um eine zweite Achse (A2) drehbar ist, die senkrecht zu der ersten Achse (A1) liegt.

2. Vorrichtung (100) nach Anspruch 1, ferner umfassend ein in dem Sockel (102) angeordnetes erstes Drehgelenk (114), durch das die Drehplatte (112) um die erste Achse (A1) drehbar mit der Bodenplatte (110) verbunden ist.

3. Vorrichtung (100) nach Anspruch 2, bei der das erste Drehgelenk (114) mindestens eine umlaufende Nut (122) und mindestes einen in der Nut (122) geführten Vorsprung (118) umfasst.

4. Vorrichtung (100) nach Anspruch 2 oder 3, bei der das erste Drehgelenk (114) einen ersten Rastmechanismus (136, 138) umfasst, der mehrere Drehraststellungen der Drehplatte (112) um die erste Achse (A1) definiert.

5. Vorrichtung (100) nach einem der vorhergehenden Ansprüche, ferner umfassend ein an dem freien Ende (106) des Haltearms (104) angeordnetes zweites Drehgelenk (164), durch das die Vermessungsmarke (108) um die zweite Drehachse (A2) drehbar mit dem Haltearm (104) verbunden ist, wobei das zweite Drehgelenk (164) vorzugsweise einen Wechselmechanismus umfasst, der das Lösen und das Anbringen der Vermessungsmarke (108) an dem Haltearm (104) ermöglicht.

6. Vorrichtung (100) nach Anspruch 5, wobei das zweite Drehgelenk (164) eine an dem freien Ende (106) des Haltearms (104) ausgebildete Aufnahme (166) und zwei in der Aufnahme (166) positionierbare Verbindungselemente (170, 172) umfasst, von denen ein erstes Verbindungselement (170) drehfest mit der Vermessungsmarke (108) gekoppelt ist und ein zweites Verbindungselement (172) in kraftschlüssiger Verbindung mit dem ersten Verbindungselement (172) betätigbar ist, wobei das erste Verbindungselement vorzugsweise eine Schraube (170) und das zweite Verbindungselement vorzugsweise eine auf der Schraube (170) drehbare Gewindebuchse (172) ist.

7. Vorrichtung (100) nach Anspruch 5 oder 6, bei der das erste Drehgelenk einen zweiten Rastmechanismus (176, 178) umfasst, der mehrere Drehraststellungen der Vermessungsmarke (108) um die zweite Achse (A2) definiert.

8. Vorrichtung (100) nach einem der vorhergehenden Ansprüche, ferner umfassend mindestens eine Adapterplatte (160a, 160b, 160c), die in einer Vertiefung (154) einsetzbar ist, die an der Unterseite der Bodenplatte (110) ausgebildet und in ihrer Form an die Adapterplatte angepasst ist.

9. Vorrichtung (100) nach Anspruch 8, bei der die Adapterplatte (160a) eine Durchgangsbohrung (162a) aufweist, oder
die Adapterplatte (160b) einen von ihrem Plattenkörper abstehenden Gewindeschaft (162b) mit einem Außengewinde und/oder einem Innengewinde aufweist, oder
die Adapterplatte (160c) eine von ihrem Plattenkörper abstehenden Aufsteckbuchse (162c) aufweist.

10. Vorrichtung (100) nach Anspruch 9, bei der die Adapterplatte (160a, 160b, 160c) aus Metall, vorzugsweise Edelstahl gefertigt ist.

11. Vorrichtung (100) nach einem der vorhergehenden Ansprüche, bei der die Bodenplatte (110) an ihrer Unterseite eine Magnetanordnung (146, 148, 150) aufweist.

12. Vorrichtung (100) nach Anspruch 11, bei der die Magnetanordnung mehrere erste Magnete (146) umfasst, die in einem Randbereich an der Unterseite der Bodenplatte (110) angeordnet sind, und/oder
die Magnetanordnung mehrere zweite Magnete (148) umfasst, die in der an der Unterseite der Bodenplatte (110) ausgebildeten Vertiefung (154) angeordnet sind, und/oder
die Magnetanordnung einen dritten Magneten (150) umfasst, der mittig an der Unterseite der Bodenplatte (104) angeordnet ist.

13. Vorrichtung (100) nach einem der vorhergehenden Ansprüche, wobei der Haltearm (104) die Form eines Bogens hat, der näherungsweise einen Viertelkreis beschreibt.

14. Vorrichtung (100) nach einem der vorhergehenden Ansprüche, bei der die Vermessungsmarke (108) die Form einer Scheibe oder einer Kugel hat und mit einem Vermessungsinstrument wie einem Scanner, einem Tachymeter und/oder einer Totalstation verwendbar ist.

15. Markierungseinrichtung, umfassend eine Vorrichtung (100) nach einem der vorhergehenden Ansprüche und ein Vermessungsstativ und/oder einen Prismenstab, wobei die Vorrichtung (100) mit ihrer Bodenplatte (110) an dem Vermessungsstativ und/oder dem Prismenstab anbringbar ist.
